# EUROPEAN PATENT SPECIFICATION

(11) **EP 4 080 184 B1**
(45) Date of publication and mention of the grant of the patent: **19.03.2025**
(21) Application number: 21169574.7
(22) Date of filing: 21.04.2021
(51) Int. Cl.: G01M 3/24, E03B 7/07

(54) **METHOD FOR SETTING UP AN ACOUSTIC LEAK DETECTION SYSTEM**
VERFAHREN ZUM AUFBAU EINES AKUSTISCHEN LECKDETEKTIONSSYSTEMS
PROCÉDÉ DE CONFIGURATION D'UN SYSTÈME DE DÉTECTION DE FUITE ACOUSTIQUE

(43) Date of publication of application: 26.10.2022
(73) Proprietor: Kamstrup A/S, 8660 Skanderborg (DK)
(72) Inventor: Dupont, Sune Hoveroust, 8660 Skanderborg (DK); Christiansen, Lars, 8660 Skanderborg (DK)
(74) Representative: Patentanwälte Hemmer Lindfeld Frese Partnerschaft mbB

(56) References cited:
- WO-A1-2015/141129
- WO-A2-2014/115039
- US-A1- 2013 262 068
- US-A1- 2014 163 916
- US-B1- 6 404 343

## Description

The invention refers to a method for setting up an acoustic leak detection system in a fluid distribution network, in particular a liquid distribution network.

It is known to arrange acoustic sensors in a liquid distribution network as an acoustic leak detection system. In particular, it is known to place acoustic sensors on the main distribution pipes of the network for detection of leaks in the pipes of the network on the basis of occurring noise. US 6,404,343 B1 discloses a water leakage detection apparatus capable of detecting water leakage on basis of acoustic vibration signals received from the water pipe. US 2017/0163916 A1 discloses a method for analyzing a water distribution network. For the analysis sensors are placed throughout sections of the water distribution network. By use of the sensors, faults may be detected. One possible fault may be a leak. When installing the acoustic sensors there it is the problem to optimize the positioning of the sensors such that, preferably, the entire network can be monitored, and to minimize the number of acoustic sensors needed. WO2015141129 A1 discloses a method for calculating the speed of sound generated by hitting with an impulse hammer on a pipe of water supply network and measure the generated vibrations with two vibration detection units placed at different distances to each other and in relation to the hammer.

It is the object of the invention to provide a method for setting up an acoustic leak detection system in a fluid, in particular liquid distribution network which allows to minimize the number of necessary sensors on the one side and to ensure on the other side that the entire network can be monitored for detection of possible leaks.

This object is achieved by a method having the features defined in claim 1. Preferred embodiments are defined in the dependent subclaims, the following description and the accompanying drawings.

The method according to the invention is used for setting up an acoustic leak detection system in a fluid, in particular liquid distribution network like a water distribution network or a heat distribution network. The network consists of several pipes for fluid or liquid distribution. Preferably, the network comprises main distribution pipes and branching distribution pipes and branching pipes connecting single points of consumption, like for example single houses.

According to the method at least one first acoustic sensor is placed in the network. The acoustic sensor, in particular, is an acoustic sensor suitable for acoustic leak detection, i.e., provided to detect noise occurring from a leakage. In particular, the sensor can detect noise in a frequency range in which noise occurring from a leakage can be expected. Such a first acoustic sensor preferably is attached directly to a pipe of the network or to a component or device connected to a pipe or may be integrated into such a component or device. Thus, preferably the at least one first acoustic sensor is in contact with the pipe such that noise transferred via the wall of the pipe and/or inside the liquid flowing through the pipe can be detected by said at least one first acoustic sensor.

Furthermore, at least one acoustic signal generator is arranged in the network at a location distanced to the at least one first acoustic sensor, i.e. distanced along a pipe length. The signal generator is placed on a pipe such that an acoustic signal generated by the signal generator is transferred via the pipe and the liquid in the network. In a following step, there is generated an acoustic signal by the acoustic signal generator, the acoustic signal being in a frequency range detectable by said at least one first acoustic sensor, i.e., preferably in a frequency range which is characteristic for leaks to be detected. The acoustic signal generator preferably comprises an electronic signal oscillator with an amplifier and a loudspeaker. In a following step, it is evaluated whether the at least one first acoustic sensor detects such generated acoustic signal, i.e. the acoustic signal produced by the signal generator. In case that such acoustic signal from the signal generator cannot be detected by said at least one first acoustic sensor, this is an indication that the acoustic signal generator is placed too far away from the first acoustic sensor, measured along the pipes of the distribution network. Thus, a leakage occurring in the area in which the sound generator has been placed would not be detected by said at least one first acoustic sensor. Therefore, according to the invention at least one second acoustic sensor is placed in the network at a location between said at least one first acoustic sensor not receiving the acoustic signal and said signal generator, measured along the pipe length of the network. The at least one second acoustic sensor is placed less distant from the position of the signal generator. This means the at least one second acoustic sensor is placed closer to the location of the acoustic signal generator than the first acoustic sensor, seen along the pipes of the distribution network. By placing at least one second acoustic sensor in the network at such a position acoustic blind spots in the network are reduced or avoided as it is ensured that sound occurring from leakages at any position in the network can be detected by at least one acoustic sensor, either at least one first acoustic sensor and/or at least one second acoustic sensor. The acoustic sensors may be connected to a leak detection or evaluation system as known in the art to localize a leakage inside the distribution network on basis of the sound or noise detected by one or more of the sensors arranged in the network. Such a leak detection or evaluation system preferably is implemented as a software in a Head End System (HES) at the water works.

In case that said acoustic signal generated by the signal generator is detected by said at least one first acoustic sensor placed in the network, no second acoustic sensor has to be placed at the location of the acoustic signal generator or in an area close to the location of the acoustic signal generator, respectively. In this case sound occurring from a leakage in said area where the sound generator has been placed can be detected by the at least one first acoustic sensor. Thus, there is no need for placing a second acoustic sensor in this area or between the location of the sound generator and the first acoustic sensor. By this method it is possible to reduce the number of acoustic sensors required.

According to a possible embodiment of the method there is placed at least one second acoustic sensor in said network prior to generating the acoustic signal by said acoustic signal generator. In case that said acoustic signal is not detected by said at least one first acoustic sensor or said at least one second acoustic sensor, then, there is placed at least one further second acoustic sensor in the network at a location which is less distant along the pipe from the location of the signal generator than the distance to said at least one first acoustic sensor and said at least one second acoustic sensor placed in the network. This means, the at least one further second acoustic sensor is placed closer to the location of the other acoustic sensors, seen along the extension of the pipes of the distribution network. By this embodiment of the method, it can be ensured that noise occurring from a leakage in the system can be detected by either a first or a second acoustic sensor in the network. To discover remaining blind spots, which may be eliminated by the arrangement of a further acoustic sensor, both the first and the second acoustic sensors already placed in the network can be used, i.e., it is evaluated whether an acoustic signal from the signal generator is received by a first or second sensor already placed in the network.

Preferably the amplitude of the acoustic signal received by the at least one first acoustic sensor and/or at least one second acoustic sensor is evaluated for determining the optimum location of a further second acoustic sensor in the network. Thus, for example at least a minimum amplitude should be detected by the sensor to ensure a secure leak detection. Preferably, the at least one second acoustic sensor or the one further second acoustic sensor is placed at a location along the pipe where an amplitude of an acoustic signal, which is output by the signal generator arranged at the same location and received by said at least one first acoustic sensor, is above a predefined minimum and preferably reaches a maximum or is close to a maximum. For example, the signal generator may be placed at different locations and the amplitudes of the signals received by the different sensors are compared for the different positions of the signal generator. Then in the next step a further second acoustic sensor may be placed at the optimum position, for example at the position of the signal generator for which one or more of the sensors detect a signal above a predefined minimum and further preferably a maximum amplitude or an amplitude close to a maximum. Preferably, at least a predefined minimum amplitude should be detected by the sensor to ensure that a leak at the respective position would be detected.

The at least one first acoustic sensor and/or an acoustic signal generator may be incorporated into a flow meter or at least one ultrasonic flow meter in said fluid distribution network may be used as a first acoustic sensor and/or used as an acoustic signal generator, wherein the flow meter preferably is located inside a branch pipe of the network. This may, in particular, be a branch pipe connecting a point of consumption like a single house. According to this embodiment of the method, flow meters arranged in the network to detect and meter the fluid consumption, can be used for leakage detection in addition. For this purpose, additional sensing elements for noise detection may be integrated into the flow meter and/or ultrasonic sensors used for flow detection may be used for noise detection, too. The branch pipes in the network may be pipes made from plastic material and the first acoustic sensors may be optimized to detect noise being conducted via those branch pipes, in particular branch pipes made from plastic material.

According to a preferred embodiment for leakage detection those sensors inside the flow meters are used in addition to second acoustic sensors placed separately inside the fluid distribution network. In a fluid distribution network, all the flow meters placed in the network may be used for noise detection, i.e. as first acoustic sensors. Alternatively, only a certain number of flow meters may be provided with such noise detection functionality allowing to use the flow meters as first acoustic sensors as described.

The at least one second acoustic sensor preferably is an acoustic sensor independent from a flow meter, preferably comprising a microphone or an accelerometer. In particular, the second acoustic sensor may be an independent device provided for noise detection only, so called data loggers. Preferably, such at least one second acoustic sensor is placed on a wall of a distribution pipe of the network, in particular a main distribution pipe of the network, or inserted through the wall into the fluid. In the latter case hydrophones may be used. Such a distribution pipe for example may be made from metal. The distribution pipe may be a pipe from which further pipes branch off. The at least one second acoustic sensor preferably is connected to the pipe at a location at which a further device is placed in the pipe, for example a valve. This allows to use existing access points for arranging the at least one second acoustic sensor on a pipe of the network.

The at least one first acoustic sensor and said at least one second acoustic sensor preferably are connected to an analysis or evaluation system, preferably via a wireless signal connection. The evaluation system may comprise a central computing device carrying out the described evaluation. The evaluation system, furthermore, may comprise a mobile or handheld device allowing a control by an operator locally in the field. Such a mobile device may be connected to a central evaluation or computing device. Alternatively, the mobile device may be in direct communication with the acoustic sensors to directly carry out the evaluation.

Preferably, the evaluation system comprises a mobile device visualizing the evaluation result, in particular on a display. Such a mobile device may be used by an operator in the field. Preferably, the visualization on a display shows the entire network, for example in form of a map indicating the locations of all the sensors and the signal generators in the network. Such a visualization may help the operator to find the optimum locations for placing second acoustic sensors in the system to avoid blind spots and at the same time minimizing the number of second acoustic sensors required.

In a possible solution said at least one acoustic signal generator may be connected and controlled by an evaluation system, in particular a central evaluation system. By such a connection the evaluation system may initiate the output of an acoustic signal by the acoustic signal generator or sound generator, respectively. Furthermore, the evaluation system or evaluation device may, then, directly receive a feedback from one or more of the first acoustic sensors and/or second acoustic sensors already placed in the system to evaluate which of the sensors can receive the acoustic signals output by the signal generator. Then, the result may be presented on a display to an operator and/or an automatic evaluation may be carried out showing at which point in the network further acoustic sensors, in particular second acoustic sensors should be placed to allow acoustic leakage detection in the entire network. This means according to this embodiment the at least one acoustic signal generator and the acoustic sensors, in particular the first acoustic sensors placed in the system may be synchronized by a central evaluation system or evaluation device. However, in alternative solutions such synchronization can be avoided. In an embodiment using an unsynchronized acoustic signal generator, the signal or sound generator may be installed and started either by the evaluation system or an operator. The signal generator may then be left for generating an acoustic signal or sound for a longer period, for example for one or several days, e.g., up to ten days.

According to a further possible embodiment said at least one acoustic signal generator may generate an acoustic signal identifying or characterizing said acoustic signal generator, i.e. being characteristic for said signal generator. For example, the signal generator may produce a predefined sound pattern being characteristic for the signal generator and which pattern can be identified by an acoustic sensor and/or an evaluation or control device evaluating signals from said sensor. For example, the sound pattern may consist of predefined phases of sound generation and silence which alternate. As an example, there may be a phase of sound generation having a predefined duration followed by a predefined phase of silence, and so on. For example, the sound generator may produce noise for six hours followed by three hours of silence and again followed by noise for six hours and so on. Such a sound pattern can be detected by the acoustic sensor without the need of synchronization with the signal generator. The sound pattern is chosen such that it clearly distinguishes over the usual noise in the system, i.e. can be identified by a suitable evaluation system. The detection or identification of the pattern may be carried out directly in the acoustic sensor, preferably a flow meter serving as an acoustic sensor. Alternatively or in addition, the sound pattern or characteristics of the sound signal produced by the sound generator may be detected by an external evaluation system, in particular a central evaluation system. The acoustic signal received by the acoustic sensor, in particular the flow meter, or a signal representing said acoustic signal, respectively, may for example be transferred to the evaluation device and the detection of the signal being characteristic for the sound generator may be carried out by the evaluation device. I.e. the respective analysis can be made in a head end system. By this method the system can be simplified since a synchronization of the sensors and the signal generator is not necessary.

In case that the analysis or evaluation shows the need for placing a further second acoustic sensor into the network, preferably, said at least one second acoustic sensor is placed at a location within a predefined or calculated distance, along the pipes of the network, to the location of the acoustic signal generator used for this evaluation step. Further preferably, the at least one second acoustic sensor is placed along a pipe between the location of the signal generator and the acoustic sensor, in particular the first acoustic sensor which could not receive the signal produced by the acoustic signal generator.

After the described analysis of the network for placing the necessary acoustic sensors, preferably the acoustic signal generator is removed from the fluid distribution network. This is preferable with a separate acoustic signal generator. In case that the acoustic signal generator is integrated into another component used in the distribution network, for example in a flow meter, the signal generator may remain in the network. In case that the signal generator is removed, it may be used at a different location of the network or in another distribution network for evaluating the need of further acoustic sensors for leakage detection.

The acoustic signal generator preferably generates an acoustic signal in a frequency range detectable by said at least one first acoustic sensor and said at least one second acoustic sensor, further preferable it generates a signal in a frequency range which is used for acoustic leakage detection. Thus, for evaluating the need of further acoustic sensors a sound signal is used which is in the frequency range of the noise which must be detected for leakage detection. Preferably, also the signal amplitude is chosen to correspond to the amplitude of a leakage noise.

The acoustic signal generator may generate a white noise signal and/or generate a signal in a frequency range between 10 Hz and 2 kHz. This is a preferred frequency region. However, the invention is not limited to this frequency region. The signal generated could be a single frequency, for example a 1 kHz signal. However, there is a risk of loosing such narrow band signal due to unforeseen resonances, coupling phenomena or acoustic damping by the pipe walls. Especially plastic pipes have a high damping. Therefore, the signal generated should preferably comprise several frequency components chosen in the frequency range between 10 Hz and 2 kHz.

The at least one acoustic signal generator may continuously output an acoustic signal. However, according to a possible embodiment the acoustic signal is generated by the signal generator for a predefined time period, for example a period of 30 seconds to one minute. An interruption of the signal output by the signal generator may enhance the analysis or signal detection by the acoustic sensors and/or a connected evaluation device, respectively.

The at least one first acoustic sensor, the at least one second acoustic sensor and/or said at least one acoustic signal generator may be battery powered. This simplifies the installation in the network, as no external power supply is required. In particular, if flow meters or flow consumption meters are used as acoustic sensors it is preferred that these flow meters are battery powered. This on the other hand requires an optimization of the method in view of the power consumption. The method preferably should be carried out with a minimized power consumption to preferably not decrease the lifetime of the flow meters depending on the battery lifetime. As described earlier, in the particular case where a flow meter or ultrasonic flow meter is also acting as an acoustic signal generator, for example with a loudspeaker integrated, the battery should be larger than used in normal flow meters, say a big D-cell lithium battery for example. Preferably, in a network one large-battery-signal-generating flowmeter per 10 to 50 houses is estimated as sufficient.

According to a further preferred option during the evaluation or analysis of the need of further acoustic sensors, the water distribution network preferably is brought into a stable state to reduce or avoid changes in noise occurring in the system or network because of other reasons, i.e. produced by further aggregates in the system. For example, pumps or valves in the system may produce noise. In this case it is preferred to set such pumps or valves in a stable condition. Furthermore, additionally or alternatively noise sources in the network may be brought into an operational condition producing the maximum noise, for example pumps may be set in a full load mode generating a high flow noise and/or pumping noise. When analyzing the system for the need of additional acoustic sensors at a maximum noise level, it can be ensured that even at high noise a leakage detection is possible. In case that the acoustic sensors can hear the acoustic signal produced by the acoustic signal generator during a high noise level then, they will later be able to hear noise at less busy flow levels, too.

According to a preferred embodiment of the invention flow meters which are configured to serve as acoustic sensors are placed in the network. It is possible to provide all flow meters with a possibility to detect acoustic noise in the system. Alternatively, flow meters provided for acoustic leak detection are placed at critical points in the system, only. The use of such special flow meters avoids further, second acoustic sensors in the network, or reduces the number of them. Preferably, mainly those flow meters are used for leakage detection in the fluid or liquid distribution network. Thus, preferably first the flow meters having the acoustic leak detection properties are placed in the network and then the described method is carried out to evaluate at which further locations additional, second acoustic sensors are required to cover the entire network for acoustic leakage detection. By this method, the number of necessary additional, second acoustic sensors can be minimized and flow meters having acoustic leak detection properties can be used instead of special sensors whenever possible.

In the following the invention is described by way of example with reference to the accompanying drawings. In this:
- Fig. 1: shows a water distribution network according to the invention, and

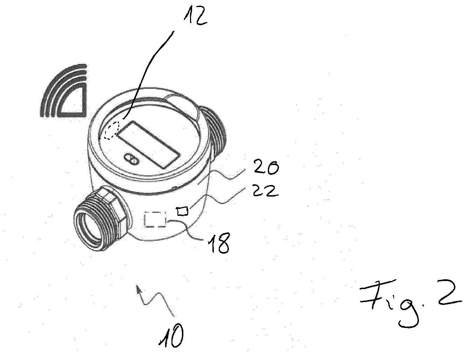

- Fig. 2: shows a flow meter serving as a first acoustic sensor.

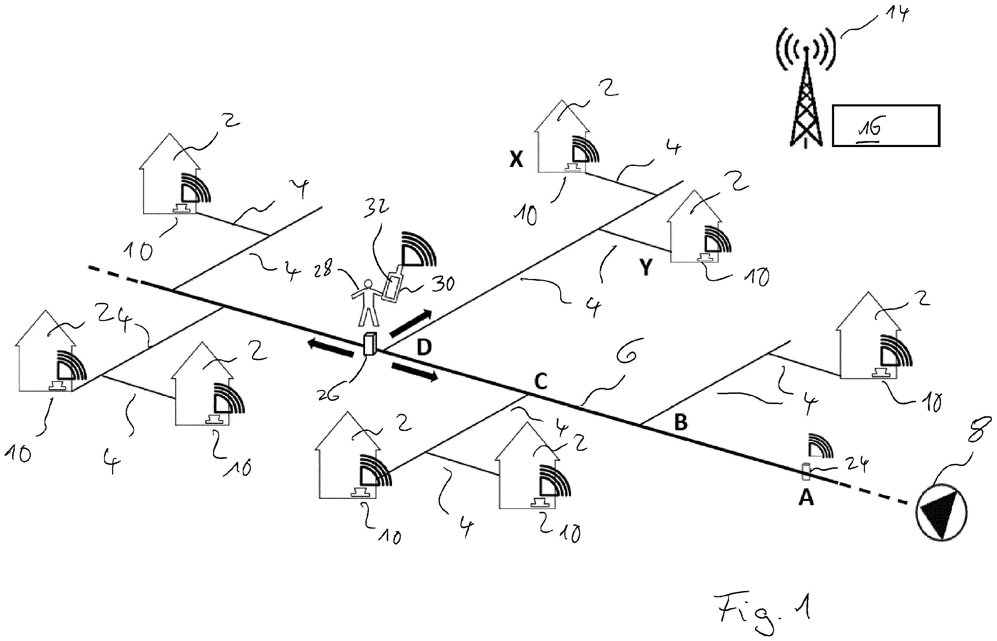

Figure 1 shows an example of a water distribution network for distributing water to different points of consumption, here shown as houses 2. The houses 2 are connected via branching pipes or branch pipes 4, which lead to a main distribution pipe 6. The water in the main distribution pipe 6 and, thus, in the entire network is delivered by a pumping device 8. At each point of consumption, i.e. in each of the houses 2 there is provided a flow meter 10 for metering the water consumption. The flow meters 10 may be ultrasonic flow meters detecting the flow by an ultrasonic sensor. The flow meters 10 are provided for wireless radio communication, i.e. include a wireless communication module 12. The wireless communication modules 12 connect the flow meters 10 via a communication network 14 to a control or evaluation device 16, i.e. a head end system. Additionally, the flow meters may include for example near field communication technology (NFC) for communicating with a handheld device. In some embodiments the flow meters 10 may have a bidirectional communication capability.

The flow meters 10 include flow sensors, in this example an ultrasonic flow sensor 18 inside the housing 20. Additionally or alternatively, the housing 20 may include a separate noise or acoustic sensor 22. By use of the ultrasonic sensor 18 or the acoustic sensor 22 the flow meter 10 may serve as a first acoustic sensor detecting acoustic noise in the branch pipes 4. The detected noise or signals derived from the detected noise are transferred via the wireless communication module 12 to the control or evaluation device 16. This preferably is the same wireless communication link which is used to transfer the metering results, i.e. the metered water consumption to the central control device 16. The noise detection function inside the flow meters 10 may be optimized to detect noise transferred by the branch pipes 4, which usually are small pipes often made from plastic material. The flow meters 10 serving as first acoustic sensors allow to listen inside the water distribution network to detect leakages inside the distribution network, i.e. outside the hous-es 2, on basis of the occurring noise. Thus, the flow meters 10 having a noise detection functionality are used instead of separate acoustic sensors for leakage detection in the network, i.e. allow to reduce the necessary number of those separate acoustic sensors for leakage detection. It would be ideal if for leakage detection the entire fluid distribution network could be covered by those first acoustic sensors in form of the flow meters 10. Usually, in a large and complex fluid distribution network, however, it is not possible to cover the entire network, i.e. there are remaining blind spots or areas in which noise cannot be detected by the flow meters 10 which are placed at the ends of the branch pipes 4, i.e. at the points of consumption in houses 2.

In those areas further acoustic sensors, namely second acoustic sensors 24 are arranged. These second acoustic sensors 24 are configured for noise detection only and may comprise a microphone, for example. In this example at point A such a second acoustic sensor 24 is arranged. The second acoustic sensor 24 is provided with a wireless communication module allowing to connect to the communication network 14 and to the control or evaluation device 16. Thus, noise signals or more precisely sound signals detected by the second acoustic sensor 24 or information derived from those signals can be transferred to the control or evaluation device 16 and used for leakage detection in the network. These second acoustic sensors 24 are used in connection with the noise detection property of the flow meters 10 to localize leakages inside the network by noise detection. Characteristic acoustic signals which occur upon leakage are transmitted or conducted via the pipes towards the sensors 10, 24 and are detected by the first acoustic sensors (flow meters 10) and the second acoustic sensors 24. It is possible to localize a leakage by considering which of the sensors receives or hears the respective noise characteristic for a leakage.

To find the locations at which the second acoustic sensors 24 must be placed to avoid blind spots in the network, an acoustic signal generator 26 is used. The signal generator 26 may for example be placed by an operator 28 at a position which in the operator's opinion may be critical for leakage detection. Preferably, the acoustic signal generator 26 is placed on the pipe, in this example the main distribution pipe 6 at a location where the pipe is accessible, for example at the position of a valve inside the network. In this example the acoustic signal generator 26 is placed at the position D. The acoustic signal generator 26 outputs an acoustic signal in the frequency range which is considered for acoustic leakage detection. Then, the operator 28 analyses which of the first acoustic sensors, i.e. the flow meters 10 detects the acoustic signal output by the acoustic signal generator 26. The operator 28 in this example uses a handheld device 30, for example a software application on a smartphone. The handheld device 30 has a wireless communication module allowing a direct wireless communication with the communication module 12 of the flow meters 10, the acoustic signal generator 26 and/or via the communication network 14 with the sensor control or evaluation device 16. The operator 28 may start the output of the acoustic signal by the signal generator 26 directly himself, by direct communication with the acoustic signal generator 26 or via the control device 16. In this case the signal generator 26 may comprise a communication module allowing the communication with the central control device 16.

In case that this acoustic signal produced by the signal generator 26 can be received by at least one of the flow meters 10, it is not necessary to place a further second acoustic sensor 24 at the position D. However, in case that neither one of the flow meters 10 nor the second acoustic sensor 24, which are already placed in the network, can detect the acoustic signal output by the acoustic signal generator 26, then the operator 28 could decide to place a further second acoustic sensor 24 at the position D. This method may be carried out for further points in the network, for example at points B and C shown in figure 1.

The handheld device 30 comprises a display 32 which may visualize the entire network to the operator 28, in particular showing all of the acoustic sensors, i.e. the flow meters 10 serving as first acoustic sensors and the second acoustic sensors 24. The display 32 may directly visualize which sensors 10 receive an acoustic signal generated by the signal generator 26.

Instead of such a manual evaluation there may be a software application inside the handheld device 30 and/or the central control device 16 evaluating at which positions second acoustic sensor 24 must be placed. The central control device 16 may inform the operator 28, for example via the handheld device 30, at which location the acoustic signal generator 26 should be placed for the evaluation process.

To further improve the acoustic leakage detection during evaluation, whether and where additional second acoustic sensors 24 are necessary, preferably the pumping device 8 and possibly further devices are set into their operational state producing a maximum of noise in the network. Thus, it is ensured that also in such operational state acoustic leakage detection can be ensured.

The described method allows to make a leakage detection in the entire network mainly by use of the flow meters 10 having leakage detection modules and to just place additional second acoustic sensors 24 in the network where necessary, i.e. at those locations or in those areas to which the flow meters 10 cannot listen. Thus, the number of necessary second acoustic sensors 24 can be minimized, and the essential part of the acoustic leakage detection can be provided by the flow meters 10 which are needed at the point of consumption, anyway.

### List of reference numerals

- 2: houses, points of consumption
- 4: branch pipe
- 6: main distribution pipe
- 8: pumping device
- 10: flow meters, first acoustic sensors
- 12: wireless communication module
- 14: communication network
- 16: control or evaluation device
- 18: flow sensor
- 20: housing
- 22: acoustic sensor
- 24: second acoustic sensor
- 26: acoustic signal generator
- 28: operator
- 30: handheld device
- 32: display
- A, B, C, D: locations inside the fluid distribution network

## Claims

1. Method for setting up an acoustic leak detection system in a fluid distribution network **characterized by** the following steps:
- placing at least one first acoustic sensor (10) in the network
- placing at least one acoustic signal generator (26) in the network at a location distanced along a pipe (4) to the at least one first acoustic sensor (10),
- generating an acoustic signal by the acoustic signal generator (26)
- evaluating whether the at least one first acoustic sensor (10) detects said generated acoustic signal, and
- in case that said generated acoustic signal is not detected by said at least one first acoustic sensor (10), placing at least one second acoustic sensor (24) in the network at a location less distant measured by pipe (4) length from the location of the signal generator (26) than the distance of said at least one first acoustic sensor (10) to the signal generator (26).

2. Method according to claim 1, **characterized in that** in case that said generated acoustic signal is detected by said at least one first acoustic sensor (10) no second acoustic sensor (24) is placed at the location of the acoustic signal generator (26).

3. Method according to claim 1 or 2, **characterized by**
placing at least one second acoustic sensor (24) in said network prior to generating the acoustic signal by said acoustic signal generator (26) and
in case that said acoustic signal is not detected by said at least one first acoustic sensor (10) or said at least one second acoustic sensor (24), placing at least one further second acoustic sensor (24) in the network at a location less distant along the pipe (4) from the location of the signal generator(26) than said at least one first acoustic sensor(10) and said at least one second acoustic sensor (24) placed in the network before.

4. Method according to one of the preceding claims, **characterized in that** the at least one second acoustic sensor (24) or the one further second acoustic sensor (24) is placed at a location along the pipe for which an amplitude of an acoustic signal which is output by the signal generator arranged at the same location and received by said at least one first acoustic sensor (10) is above a predefined minimum and preferably has a maximum.

5. Method according to one of the preceding claims, **characterized in that** said at least one first acoustic sensor (10) and/or an acoustic signal generator (26) are incorporated into a flow meter (10) or that at least one ultrasonic flow meter in said fluid distribution network is used as a first acoustic sensor (10), wherein the flow meter preferably is located inside a branch pipe (4) of the network.

6. Method according to one of the preceding claims, **characterized in that** said at least one second acoustic sensor (24) is an acoustic sensor independent from a flow meter (10), preferably comprising a microphone and/or an accelerometer.

7. Method according to one of the preceding claims, **characterized in that** said at least one second acoustic sensor (24) is placed on a distribution pipe (6) of the network, the distribution pipe (6) preferably being made from metal.

8. Method according to one of the preceding claims, **characterized in that** said at least one first acoustic sensor (10) and said at least one second acoustic sensor (24) are connected to an evaluation system (16), preferably via a wireless signal connection (14).

9. Method according to one of the preceding claims, **characterized in that** said evaluation system comprises a mobile device (30) visualizing the evaluation result.

10. Method according to one of the preceding claims, **characterized in that** said at least one acoustic signal generator (26) is connected to and controlled by an evaluation system (16).

11. Method according to one of the preceding claims, **characterized in that** said at least one acoustic signal generator (26) generates an acoustic signal identifying said acoustic signal generator (26), for example by a predefined sound pattern.

12. Method according to one of the preceding claims, **characterized in that** said at least one acoustic generator (26) is removed from the fluid distribution network after evaluating the necessity of arranging a second acoustic sensor (24).

13. Method according to one of the preceding claims, **characterized in that** said at least one acoustic signal generator (26) generates an acoustic signal in a frequency range detectable by said at least one first acoustic sensor (10) and said at least one second acoustic sensor (24).

14. Method according to one of the preceding claims, **characterized in that** said at least one acoustic signal generator (26) generates a white noise signal and/or generates a signal in a frequency range between 10 Hz and 2 kHz.

15. Method according to one of the preceding claims, **characterized in that** said acoustic signal is generated by said at least one acoustic signal generator (26) for a period of 30 seconds to one minute.

16. Method according to one of the preceding claims, **characterized in that** the at least one first acoustic sensor (10), the at least one second acoustic sensor (24) and/or said at least one acoustic signal generator (26) are battery powered.

## Patentansprüche

1. Verfahren zum Einrichten eines akustischen Lecksuchsystems in einem Fluidverteilungsnetz, **gekennzeichnet durch** die folgenden Schritte:
- Anordnen wenigstens eines ersten Akustiksensors (10) in dem Netz,
- Anordnen wenigstens eines Akustiksignalgenerators (26) an einer Stelle in dem Netz, die entlang eines Rohrs (4) von dem wenigstens einen Akustiksenosr (10) beabstandet ist,
- Erzeugen eines Akustiksignals durch den Akustiksignalgenerator (26),
- Bewerten, ob der wenigstens eine erste Akustiksensor (10) das erzeugte Akustiksignal detektiert, und
- Anordnen wenigstens eines zweiten Akustiksensors (24) an einer Stelle in dem Netz, die gemessen an der Länge des Rohrs (4) weniger weit als die Entfernung des wenigstens einen ersten Akustiksensors (10) zu dem Signalgenerator (26) von der Stelle des Signalgenerators (26) entfernt ist, falls das erzeugte Akustiksignal nicht durch den wenigstens einen ersten Akustiksensor (10) detektiert wird.

2. Verfahren nach Anspruch 1, **dadurch gekennzeichnet, dass** kein zweiter Akustiksensor (24) an der Stelle des Akustiksignalgenerators (26) angeordnet wird, falls das erzeugte Akustiksignal durch den wenigstens einen ersten Akustiksensor (10) detektiert wird.

3. Verfahren nach Anspruch 1 oder 2, **gekennzeichnet durch**
Anordnen wenigstens eines zweiten Akustiksensors (24) in dem Netz, bevor das Akustiksignal durch den Akustiksignalgenerator (26) erzeugt wird, und
Anordnen wenigstens eines weiteren zweiten Akustiksensors (24) an einer Stelle in dem Netz, die entlang des Rohrs (4) weniger weit als der wenigstens eine erste Akustiksensor (10) und der wenigstens eine zweite Akustiksensor (24), die zuvor in dem Netz angeordnet wurden, von der Stelle des Signalgenerators (26) entfernt ist, falls das Akustiksignal nicht durch den wenigstens einen ersten Akustiksensor (10) oder den wenigstens einen zweiten Akustiksensor (24) detektiert wird.

4. Verfahren nach einem der vorhergehenden Ansprüche, **dadurch gekennzeichnet, dass** der wenigstens eine zweite Akustiksensor (24) oder der eine weitere zweite Akustiksensor (24) an einer Stelle entlang des Rohrs angeordnet wird, für die eine Amplitude eines Akustiksignals, das durch den an der gleichen Stelle angeordneten Signalgenerator ausgegeben wird und durch den wenigstens einen ersten Akustiksensor (10) empfangen wird, über einem vorherbestimmten Mindestmaß liegt und vorzugsweise ein Höchstmaß aufweist.

5. Verfahren nach einem der vorhergehenden Ansprüche, **dadurch gekennzeichnet, dass** der wenigstens eine erste Akustiksensor (10) und/oder ein Akustiksignalgenerator (26) in einen Durchflussmesser (10) aufgenommen sind, oder dass wenigstens ein Ultraschall-Durchflussmesser in dem Fluidverteilungsnetz als ein erster Akustiksensor (10) verwendet wird, wobei sich der Durchflussmesser vorzugsweise in dem Inneren eines Zweigrohrs (4) des Netzes befindet.

6. Verfahren nach einem der vorhergehenden Ansprüche, **dadurch gekennzeichnet, dass** der wenigstens eine zweite Akustiksensor (24) ein von einem Durchflussmesser (10) unabhängiger Akustiksensor ist und vorzugsweise ein Mikrophon und/oder einen Beschleunigungsmesser aufweist.

7. Verfahren nach einem der vorhergehenden Ansprüche, **dadurch gekennzeichnet, dass** der wenigstens eine zweite Akustiksensor (24) an einem Verteilerrohr (6) des Netzes angeordnet wird, wobei das Verteilerrohr (6) vorzugsweise aus Metall hergestellt ist.

8. Verfahren nach einem der vorhergehenden Ansprüche, **dadurch gekennzeichnet, dass** der wenigstens eine erste Akustiksensor (10) und der wenigstens eine zweite Akustiksensor (24) vorzugsweise über eine drahtlose Signalverbindung (14) an ein Bewertungssystem (16) angeschlossen sind.

9. Verfahren nach einem der vorhergehenden Ansprüche, **dadurch gekennzeichnet, dass** das Bewertungssystem ein mobiles Gerät (30) aufweist, dass das Bewertungsergebnis sichtbar darstellt.

10. Verfahren nach einem der vorhergehenden Ansprüche, **dadurch gekennzeichnet, dass** der wenigstens eine Akustiksignalgenerator (26) an ein Bewertungssystem (16) angeschlossen ist und durch dieses gesteuert wird.

11. Verfahren nach einem der vorhergehenden Ansprüche, **dadurch gekennzeichnet, dass** der wenigstens eine Akustiksignalgenerator (26) ein Akustiksignal erzeugt, das den Akustiksignalgenerator (26) zum Beispiel durch ein vordefiniertes Schallmuster identifiziert.

12. Verfahren nach einem der vorhergehenden Ansprüche, **dadurch gekennzeichnet, dass** der wenigstens eine Akustiksignalgenerator (26) nach dem Bewerten der Notwendigkeit des Anordnens eines zweiten Akustiksensors (24) von dem Fluidverteilungsnetz entfernt wird.

13. Verfahren nach einem der vorhergehenden Ansprüche, **dadurch gekennzeichnet, dass** der wenigstens eine Akustiksignalgenerator (26) ein Akustiksignal in einem Frequenzbereich erzeugt, der durch den wenigstens einen ersten Akustiksensor (10) und den wenigstens einen zweiten Akustiksensor (24) detektierbar ist.

14. Verfahren nach einem der vorhergehenden Ansprüche, **dadurch gekennzeichnet, dass** der wenigstens eine Akustiksignalgenerator (26) ein weißes Rauschsignal erzeugt und/oder ein Signal in einem Frequenzbereich zwischen 10 Hz und 2 kHz erzeugt.

15. Verfahren nach einem der vorhergehenden Ansprüche, **dadurch gekennzeichnet, dass** das Akustiksignal durch den wenigstens einen Akustiksignalgenerator (26) für einen Zeitraum von 30 Sekunden bis zu einer Minute erzeugt wird.

16. Verfahren nach einem der vorhergehenden Ansprüche, **dadurch gekennzeichnet, dass** der wenigstens eine erste Akustiksensor (10), der wenigstens eine zweite Akustiksensor (24) und/oder der wenigstens eine Akustiksignalgenerator (26) batteriebetrieben sind.

## Revendications

1. Procédé de mise en place d'un système de détection de fuite acoustique dans un réseau de distribution de fluide **caractérisé par** les étapes suivantes :
- le placement d'au moins un premier capteur acoustique (10) dans le réseau,
- le placement d'au moins un générateur de signal acoustique (26) dans le réseau à un emplacement distant le long d'une conduite (4) du au moins un premier capteur acoustique (10),
- la génération d'un signal acoustique par le générateur de signal acoustique (26),
- l'évaluation si le au moins un premier capteur acoustique (10) détecte ledit signal acoustique généré, et
- dans le cas où ledit signal acoustique généré n'est pas détecté par ledit au moins un premier capteur acoustique (10), le placement d'au moins un deuxième capteur acoustique (24) dans le réseau à un emplacement moins éloigné mesuré par la longueur de la conduite (4) de l'emplacement du générateur de signal (26) que la distance dudit au moins un premier capteur acoustique (10) au générateur de signal (26).

2. Procédé selon la revendication 1, **caractérisé en ce que** dans le cas où ledit signal acoustique généré est détecté par ledit au moins un premier capteur acoustique (10), aucun deuxième capteur acoustique (24) n'est placé à l'emplacement du générateur de signal acoustique (26).

3. Procédé selon la revendication 1 ou 2, **caractérisé par**
le placement d'au moins un deuxième capteur acoustique (24) dans ledit réseau avant de générer le signal acoustique par ledit générateur de signal acoustique (26) et
dans le cas où ledit signal acoustique n'est pas détecté par ledit au moins un premier capteur acoustique (10) ou ledit au moins un deuxième capteur acoustique (24), le placement d'au moins un autre deuxième capteur acoustique (24) dans le réseau à un emplacement moins distant le long du tuyau (4) de l'emplacement du générateur de signal (26) que ledit au moins un premier capteur acoustique (10) et ledit au moins un deuxième capteur acoustique (24) placés dans le réseau auparavant.

4. Procédé selon une des revendications précédentes, **caractérisé en ce que** le au moins un deuxième capteur acoustique (24) ou l'autre deuxième capteur acoustique supplémentaire (24) est placé à un emplacement le long de la conduite pour lequel une amplitude d'un signal acoustique qui est émis par le générateur de signaux disposé au même emplacement et reçu par ledit au moins un premier capteur acoustique (10) est supérieure à un minimum prédéfini et présente de préférence un maximum.

5. Procédé selon une des revendications précédentes, **caractérisé en ce que** ledit au moins un premier capteur acoustique (10) et/ou un générateur de signaux acoustiques (26) sont intégrés dans un débitmètre (10) ou **en ce qu'**au moins un débitmètre à ultrasons dans ledit réseau de distribution de fluide est utilisé comme premier capteur acoustique (10), dans lequel le débitmètre est de préférence situé à l'intérieur d'une conduite de dérivation (4) du réseau.

6. Procédé selon une des revendications précédentes, **caractérisé en ce que** ledit au moins un deuxième capteur acoustique (24) est un capteur acoustique indépendant d'un débitmètre (10), comprenant de préférence un microphone et/ou un accéléromètre.

7. Procédé selon une des revendications précédentes, **caractérisé en ce que** ledit au moins un deuxième capteur acoustique (24) est placé sur une conduite de distribution (6) du réseau, la conduite de distribution (6) étant de préférence en métal.

8. Procédé selon une des revendications précédentes, **caractérisé en ce que** ledit au moins un premier capteur acoustique (10) et ledit au moins un deuxième capteur acoustique (24) sont connectés à un système d'évaluation (16), de préférence via une connexion de signal sans fil (14).

9. Procédé selon une des revendications précédentes, **caractérisé en ce que** ledit système d'évaluation comprend un dispositif mobile (30) visualisant le résultat d'évaluation.

10. Procédé selon une des revendications précédentes, **caractérisé en ce que** ledit au moins un générateur de signal acoustique (26) est connecté à un système d'évaluation (16) et commandé par celui-ci.

11. Procédé selon une des revendications précédentes, **caractérisé en ce que** ledit au moins un générateur de signal acoustique (26) génère un signal acoustique identifiant ledit générateur de signal acoustique (26), par exemple par un motif sonore prédéfini.

12. Procédé selon une des revendications précédentes, **caractérisé en ce que** ledit au moins un générateur acoustique (26) est retiré du réseau de distribution de fluide après évaluation de la nécessité d'agencer un deuxième capteur acoustique (24).

13. Procédé selon une des revendications précédentes, **caractérisé en ce que** ledit au moins un générateur de signal acoustique (26) génère un signal acoustique dans une plage de fréquences détectable par ledit au moins un premier capteur acoustique (10) et ledit au moins un deuxième capteur acoustique (24).

14. Procédé selon une des revendications précédentes, **caractérisé en ce que** ledit au moins un générateur de signal acoustique (26) génère un signal de bruit blanc et/ou génère un signal dans une plage de fréquence comprise entre 10 Hz et 2 kHz.

15. Procédé selon une des revendications précédentes, **caractérisé en ce que** ledit signal acoustique est généré par ledit au moins un générateur de signal acoustique (26) pendant une période de 30 secondes à une minute.

16. Procédé selon une des revendications précédentes, **caractérisé en ce que** le au moins un premier capteur acoustique (10), le au moins un deuxième capteur acoustique (24) et/ou ledit au moins un générateur de signal acoustique (26) sont alimentés par batterie.
